# EUROPÄISCHE PATENTSCHRIFT

(11) **EP 2 114 701 B1**
(45) Veröffentlichungstag und Bekanntmachung des Hinweises auf die Patenterteilung: **23.02.2011**
(21) Anmeldenummer: 08706853.2
(22) Anmeldetag: 02.02.2008
(51) Int. Cl.: B60C 23/00

(54) **RADACHSE UND ANTRIEBS- ODER GELENKWELLE FÜR FAHRZEUGE MIT ZENTRALER REIFENDRUCKVERSORGUNG**
WHEEL AXLE AND DRIVE OR UNIVERSAL SHAFT FOR VEHICLES WITH A CENTRAL TYRE PRESSURE SUPPLY
ESSIEU ET ARBRE D'ENTRAÎNEMENT OU DE TRANSMISSION POUR VÉHICULES À SYSTÈME CENTRAL D'ALIMENTATION EN PRESSION DE GONFLAGE

(30) Priorität: 06.02.2007 DE 102007005765
(43) Veröffentlichungstag der Anmeldung: 11.11.2009
(73) Patentinhaber: Saadat M. Mohsen, 59494 Soest (DE)
(72) Erfinder: SAADAT, Fereshteh, 59494 Soest (DE)
(86) Internationale Anmeldenummer: PCT/DE2008/000188
(87) Internationale Veröffentlichungsnummer: WO 2008/095470

(56) Entgegenhaltungen:
- CH-A- 296 220
- DE-T2- 69 204 527
- US-A- 4 765 385

## Beschreibung

Die Erfindung betrifft eine Radachse und Antriebswelle oder Gelenkwelle für Fahrzeugräder mit automatischer Druckmediumzu- und Abfuhr seitens des Fahrzeuges, wobei das Druckmedium, Luft oder andere Gase, während der Fahrt vom Fahrzeug selbst den Rädern zugeführt und dabei der Reifendruck durch den Bordcomputer geregelt wird.

Falscher Reifendruck in den Reifen führt zur Erwärmung und schließlich zum Platzen der Reifen. Platzt der Reifen bei hoher Geschwindigkeit, so besteht erhöhter Unfallgefahr. Außerdem benötigt jeder Reifen abhängig von dem Fahruntergrund, Beladungszustand, Außentemperatur, Reifengröße, Reifentyp und Witterungsverhältnissen jeweils einen anderen Reifendruck. In einigen Ländern ist inzwischen die Anzeige und Kontrolle des Reifendruckzustandes Pflicht.

Seit über 100 Jahren werden Kraftfahrzeuge mit Druckluft befüllten Reifen gebaut. Das Bemühen der Fachwelt, den Reifendruck während der Fahrt durch das Fahrzeug selbst regulieren zu lassen, ist aus zahlreichen Patentanmeldungen bekannt. Die Lösungsansätze zeigen generell zwei verschiedene Wege. Während die erste Gruppe der Erfinder versucht zwischen der Reifenluft und der fahrzeugseitigen Druckluft eine dauerhafte Verbindung herzustellen, schaltet die zweite Gruppe diese Verbindung nur bei Bedarf ein und wieder aus, um den Verschleiß der Ventile und Dichtungen möglichst gering zu halten. Darüber hinaus wird bei fast allen dieser Lösungsansätzen versucht, die Luft vom feststehenden Teil des Fahrzeugs durch radiale Kanäle in den rotierenden Teil zu führen und diese Kanäle beidseitig durch bekannte Radialdichtringe abzudichten. Dadurch erhöhen sich die Anzahl und die Länge der Dichtflächen und somit auch die Reibung und der Verschleiß. Es ist von Bedeutung, dass die bisherigen Ansätze bei der Lösung dieses Problems noch keinen Durchbruch erzielt haben. Sie haben alle das Problem nicht vollständig, nicht einfach und nicht sicher genug gelöst, weswegen sie bisher nicht die Serienreife und Serienproduktion erlangt haben.

So zeigt DE 697 04 067 T2 eine angetriebene Gelenkwelle, die die Druckluft nur bei Bedarf zum Nachfüllen radial über eine eigens für diese Aufgabe kreierte Dichtungseinheit einseitig, d.h. nur in eine Richtung dem Reifenrückschlagventil in der Mitte der Felge zuführt. Die rotierende Radnabe selbst beinhaltet kein Ventil. Dieses System hat den Vorteil, im drucklosen Zustand keine Reibung und keinen Verschleiß zu besitzen. Es arbeitet nach einem ähnlichen Prinzip wie das einer Scheibenbremse, die ohne Druck keine Berührung mit dem rotierenden Teil besitzt. Die Nachteile dieses Systems sind jedoch enorm. Es besitzt viele, mindestens zehn, komplizierte Komponenten. Es lässt zuerst viel Luft entweichen, bevor die Membrankupplungen ansprechen und die Dichtflächen abdichten. Es benötigt die Einhaltung bestimmter geometrischen Verhältnisse, um die Kraft auf die Fläche der Dichtungselemente größer zu halten als die Kraft, die versucht, die Dichtungselemente abzuheben und schließlich führt dieses System die Luft dem Reifen nur einseitig zu und besitzt eine sehr aufwendige Montage und Demontage.

DE 40 29 311 C2 zeigt ein Verfahren zur Lösung der gestellten Aufgabe. Bei diesem Verfahren wird die Druckluft über radiale Kanäle (19) der rotierenden Gelenkwelle und von dort über schräg radiale und axiale Bohrungen (20) einem einseitig mit der Gelenkwelle und anderseitig mit der Reifenleitung (40) verbundenen und pneumatisch betätigten Ventil zugeführt. Dieses Verfahren hat den Vorteil, nur im Bedarfsfall d.h. von Zeit zu Zeit die Reifenluft mit der Luftquelle des Fahrzeuges zwecks Regulierung zu verbinden. Die Betätigung des Schaltventils (3) erfolgt pneumatisch durch Impulse über die vorhandene Druckluft und bedarf somit keiner zusätzlichen Leitung mit Schleifringen zur rotierenden Radnabe (27). Dieses Verfahren hat folgende Nachteile: Zwecks Abdichtung des Luftkanals werden zwei statische und zwei dynamische Radialdichtringen (42) sowie weitere Maschinenelemente benötigt. Das Schaltventil (3) ist stets mit der Radnabe verbunden. Der Reifenschlauch (40) ist mit dem Reifendruck an das Schaltventil verschraubt. Beim Radwechsel z.B. vom Winter- auf Sommerreifen und umgekehrt muss der Reifenschlauch (40) vom Ventil (3) getrennt werden, wodurch der Reifen entleert wird. Außerdem stellt der außen liegende Schlauch sowohl eine Gefahr als auch eine Unwucht dar.

DE 36 19 603 A1 zeigt eine feststehende Radachse (5) mit einer auf der Radachse und entlang dieser integrierten pneumatisch betätigten Kupplungseinheit (9, 11), die sich bei Bedarf an den in der Felgenmitte platzierten Ventilkörper (12, 13) ankoppelt und den Reifen über die außen liegende Leitung (14) mit Druckluft versorgt. Die Kupplung (9, 11) besteht aus einem Dichtungsmaterial wie Gummi und ist radseitig an der durchbohrten Kolbenstange einer pneumatisch betätigten Zylinder-Kolben-Einheit angebracht, die einem Differenzdruckventil (24) nachgeschaltet ist. Als Vorteil dieses Systems wird genannt, dass es im normalen Fahrzeugbetrieb keine Berührung und somit auch keinen Verschleiß besitzt. Kurz vor dem Start d.h. bei stehendem Fahrzeug, nachdem der Schlüssel in das Fahrzeugschloss gesteckt wurde, bewegt sich die durchbohrte Kolbenstange (6) durch den pneumatischen Druck auf die Kolbenfläche (19) gegen die Kraft der Rückstellfeder (18) zum Reifenventil (12, 13) hin, koppelt sich an dieses luftdicht und befüllt den Reifen mit dergleichen Druckluft, die die Kolbenstange an das Reifenventil angekoppelt hat. Zu den Nachteilen dieses Systems gehören die Tatsachen, dass es sich zuerst um eine feststehende, d.h. nicht angetriebene Radachse handelt, weswegen die Luftdruckregulierung vor dem Start des Fahrzeuges, d.h. im Stillstand erfolgen soll. Des Weiteren ist mit keinem Wort auf die eigentliche Problematik der Schnittstelle des Kupplungskopfes (9, 11) mit dem Ventilkörper (12, 13) eingegangen. Wie viel Druck ist an dieser Stelle auf die Kupplung erforderlich, um sie dicht zu bekommen? Dieser Druck einschließlich des erforderlichen Drucks zum Überwinden der Haftreibung in den Dichtungsringen der Kolbenstange (6) mit dem erforderlichen Druck zur Überwindung der Kraft der Rückstellfeder (18) zusammen darf nicht höher sein als der minimale Reifendruck. Ansonsten kann der Reifendruck nicht reduziert und nicht reguliert werden, da dies durch einen einzigen Luftkanal erfolgt. Des Weiteren muss die Achse soweit durchbohrt werden, dass sie die axial bewegliche und durchbohrte Kolbenstange (6) aufnimmt und mit den Dichtelementen (18) axial beweglich abdichtet. Die genannten Nachteile dieses Systems sind derart gravierend, dass eine sichere Funktion nicht gewährleistet ist. Daher hat sich auch dieses System in der Praxis nicht bewährt.

EP 1 738 936 A1 zeigt eine Kombieinheit bestehend aus einem Wälzlagerpaket dessen hohle Mitte für Druckluft zufuhr zum Rad und Reifen benutzt wird. Als ein Element der Druckluftzuführung wird der die Lagereinheit abschließende Blechdeckel (50) erwähnt, ohne seine während der Rotation abdichtende Funktion gegenüber einem daran befestigten Ventil und Schlauch (A, B) näher zu erläutern. Diese Veröffentlichung bezieht sich auf eine Wälzlagereinheit und löst nicht die gestellte Aufgabe der Schnittstellenproblematik. Seit es Wälzlager gibt, besitzen diese stets eine hohle Mitte, die für jede anderweitige Aufgabe genutzt werden können. Dass hier eine Lagereinheit mit hohler Mitte patentiert worden ist, wird diesseits mit großem Erstaunen zur Kenntnis genommen. Es stellt sich die Frage nach erfinderischer Höhe und Leistung!

Die PCT/SE 99/01574 (WO 00/15451 A1) zeigt Druckluftzufuhr zu einem Reifen über einen Ring (4.1), der außen an der Stirnseite einer Felge (1) befestigt ist. Dabei handelt es sich um ein rotierendes Rad eines Traktors, dessen große Radnabe (3) feststeht und viel Platz zur Durchführung und Befestigung von Teilen (5) bietet. Der rotierende Ring (4.1) weist eine axiale Nut auf, in der sich eine feststehende Dichtung befindet, die die Druckluft vom feststehenden Teil (6), der mittels einer Schelle außerhalb des Fahrzeuges an der Radachse befestigt ist, zum rotierenden Teil der Fahrzeugfelge führt. Der feststehende Ring (6) wird mittels Wälzlagers (4.9) in Bezug auf das Rad (4.1, 4.2) zentriert und über das Glied (5.1) an der Achse fest gehalten. Dieses Prinzip ist für langsam fahrende Fahrzeuge wie Traktoren sicherlich anwendbar, wenn auch sehr teuer. Von erheblichem Nachteil sind jedoch die große Anzahl und der sehr große Durchmesser der an der Lösung der Aufgabe beteiligten Teile und deren Anordnung an der Außenseite der Fahrzeugfelge. Allein der große Durchmesser der Dichtung und des Abstreifers (4.11) sowie des großen Wälzlagers (4.9) machen dies zu einem sehr teuren System. Weiterhin ist dieses Prinzip für Straßenfahrzeuge wie Personenkraftwagen völlig ungeeignet, da es außen an der Felge nicht rotierende Teile befestigen muss, die für Menschen eine Gefahr darstellen, abgesehen davon, dass angetriebene Räder keinen feststehenden Teil besitzen, an dem der feststehende Ring (6) befestigt werden könnte.

CH 296 220 A beschreibt eine Vorrichtung zur Durchführung von Druckluft-, Messschlauch und ein Kabel durch die hohle Mitte einer feststehenden Fahrzeugachse, um den Reifendruck während der Fahrt zu messen und zu regulieren. Diese Einrichtung benötigt ein großes Volumen für viele bewegliche und elektromechanische Bauteile und Ventile, die komplett in der feststehenden Achse vor der Radlagerung untergebracht werden müssen. Für heutige Fahrzeuge ist dies nicht realisierbar, da die Achsen sehr schmal bemessen sind. US 4 765 385 A beschreibt eine Vorrichtung zur Durchführung und Regulierung von Druckluft während der Fahrt über die Stirnseite einer eigens für diese Aufgabe konstruierten Spezialfelge. Damit scheitert dieses System für die Anwendung bei handelsüblichen Fahrzeugfelgen.

DE 692 04 527 T2 beschreibt eine Vorrichtung zur Fernsteuerung des Reifendrucks während der Fahrt. Die gesamte Vorrichtung mit allen in ihr vorhandenen Ventilen und einer Membrane befindet sich am rotierenden Teil des Rades. Es folgt keinen Hinweis darüber, wie die Druckluft vom feststehenden Teil der Radachse in die rotierende Vorrichtung am Rad gelangt. Somit liefert auch diese Patentschrift keinen brauchbaren Hinweis zur einfachen und sicheren Lösung des Problems.

Demgegenüber liegt der Erfindung die Aufgabe zugrunde, das Druckmedium während der Fahrt fahrzeugseitig dem Reifen der nicht angetriebenen und der angetriebenen Räder gleichermaßen und einheitlich mit einem Minimum an Platz- und Komponentenbedarf sowie ein Minimum an Reibungsmoment derart zuzuführen, dass Jederzeit ein Radwechsel zwischen den angetriebenen und nicht angetriebenen Rädern möglich wird. Dabei darf weder die Radachse noch die Antriebswelle innerhalb der Radnabe nennenswert geschwächt werden oder mehr Platz benötigen, und bei der Montage bzw. Demontage der Räder darf weder vom Rad noch vom Fahrzeug Druckmedium entweichen.

Diese Aufgabe wird erfindungsgemäß mit den in Anspruch 1 angegebenen Merkmalen gelöst.

Die Unteransprüche stellen vorteilhafte Weiterbildungen der Erfindung dar.

Aufgrund der axial in der neutralen Phase durchbohrten Radachse und Antriebs- oder Gelenkwelle mit einem am Ende der axialen Bohrung in oder nach der Radmutter zentrisch platzierten handelsüblichen Druckmediumzufuhr- und Rückschlagventil, verbunden mit einem um das Ventil koaxial angeordneten Kupplungselement, bestehend aus einer axialen oder radialen Nut für eine dynamisch oder statisch abdichtende Dichtung, werden alle oben genannten Anforderungen der Aufgabenstellung sehr einfach, eindeutig und sicher erfüllt.

In einfachster Ausführung besitzt eine erfindungsgemäße Radachse und Antriebs- bzw. Gelenkwelle in ihrer Mitte entlang der Rotationsachse des Rades eine axiale Bohrung und führt das Druckmedium von der Fahrzeugseite durch die axiale Bohrung zu einem vorzugsweise handelsüblichen Druckluftventil, das so genannte Achsventil, das am Ende der axialen Bohrung in der Radachse und Antriebs- oder Gelenkwelle, vorzugsweise innerhalb oder nach der Radmutter, an die axiale Bohrung austauschbar befestigt ist und mit einem ähnlichen Ventil inmitten der Felgennabe, so genanntes Felgenventil, passiv d.h. ohne Fremdenergie zusammenarbeitet.

Im nicht montierten Zustand des Rades sorgt das Achsventil dafür, dass kein Druckmedium aus der Radachse und Antriebswelle oder Gelenkwelle entweicht. Das Felgenventil sorgt auf gleicher Weise dafür, dass keine Luft aus dem Reifen entweichen kann.

Nach der Montage des Rades drückt die Ventilnadel des in der Felgennabe des Rades untergebrachten Felgenventils gegen die Ventilnadel des Achsventils, so dass sich beide Sperrkräfte, die sich aus der Federkraft und Luftdruck resultieren, gegenseitig aufheben und beide Ventile öffnen. Die Ventilnadelspitzen der beiden Ventile, Achsventil und Felgenventil sind so geformt, dass sie sich gegenseitig Halt bieten und bei der Rotationsbewegung relativ zu einander eine sehr geringe Reibung und Verschleiß aufweisen. Dies kann vorzugsweise in Form von konkav und konvex bzw. positiv und negativ kegelförmig gestalteten Nadelköpfen erfolgen, die ineinander greifen und somit ein verschleiß- und reibungsarmes Lager darstellen.

Damit das Druckmedium seitlich des Ventils nicht entweicht, besitzen sowohl die Radachsen als auch die Antriebs- oder Gelenkwellen stirnseitig zum Rad hin je eine Kupplungshälfte, die sich beim Aufsetzen des Rades auf die Radnabe an die Kupplungshälfte des Rades inmitten der Felgennabe ankoppelt. Jedes Kupplungselement besteht aus einer in Bezug auf die Rotationsachse koaxialen Nut, in der sich eine dynamische oder statische Axial- oder Radialdichtung befindet. Diese Nut kann sowohl stirnseitig axial als auch auf einen kleinen Absatz als Außennut oder in einer stirnseitigen Senkung als Innennut ausgeführt werden.

Besitzt die feststehende Radachse stirnseitig um ihr Achsventil eine axiale Nut, so dichtet in ihr eine dynamische Axialdichtung, mit den Dichtlippen zur Rotationsachse hin gerichtet, gegen eine mit ihr korrespondierende Nut oder plane Fläche an der rotierenden Felge oder in der Felgennabe.

Besitzt die feststehende Radachse koaxial um ihr Achsventil einen kleinen Absatz oder eine kleine Senkung mit einer umfangsseitigen Außen- oder Innennut, so dichtet in ihr eine dynamische Radialdichtung, mit koaxialen Dichtlippen in Bezug auf die Rotationsachse, gegen eine entsprechende Senkung oder Absatz in der rotierenden Felge oder Felgennabe.

Besitzt die rotierende Antriebs- oder Gelenkwelle stirnseitig um ihr Achsventil eine axiale Nut, so dichtet in ihr eine statische Axialdichtung gegen eine ihr gegenüber liegende axiale Nut oder plane Fläche an der mitrotierenden Felge oder in der Felgennabe.

Besitzt die rotierende Antriebs- oder Gelenkwelle koaxial um ihr zentrales Ventil einen kleinen Absatz oder eine kleine Senkung mit einer am zylindrischen Umfang angebrachten Außennut oder Innennut, so dichtet in ihr eine statische Radialdichtung gegen eine mit dem Absatz korrespondierende Senkung bzw. gegen einen mit der Senkung korrespondierenden Absatz in der mitrotierenden Felge oder Felgennabe.

Eine vorteilhafte Gestaltung der Erfindung befestigt das Achsventil in einem kleinen Absatz eines separaten Teils als Ventilträger mit zwei unterschiedlichen Durchmessern wie eine Kolben-Kolbenstangen-Einheit, die in der axialen Bohrung der Achse und der Antriebs- oder Gelenkwelle begrenzt axial beweglich angeordnet ist und an ihren zwei unterschiedlichen Durchmessern gegenüber der Radachse und der Antriebswelle radial abgedichtet ist, wobei der Raum zwischen den beiden Dichtungen durch eine kleine Bohrung mit dem Atmosphärendruck verbunden ist.

Der Ventilträger wird vorzugsweise in ein zweites rotationssymmetrisches Teil als ein Zylinderkörper abdichtend jedoch axial beweglich hineingesteckt, der Sinnvollerweise auch die Dichtungsfläche der Dichtung zwischen der Radachse oder Antriebswelle und der Felge bzw. Felgennabe beinhaltet. Am Umfang der beiden Absätze zwischen dem Ventilträger als Kolben-Kolbenstangeneinheit und seinem zylindrischen Halter befindet sich je eine kleine Kolben- oder Stangendichtung, die verhindern, dass Druckluft von den Seiten in den Zwischenraum zwischen den beiden Kolben- oder Stangendichtungen gelangen kann, der mit der Außenluft verbunden ist.

Ist das Reifendruckregelsystem des Fahrzeuges oder die Druckluftquelle ausgeschaltet, so drückt das Felgenventil auf das Achsventil und schiebt das Achsventil mit dem axial beweglichen Ventilträger als Kolbenstange zurück. Somit schließt das Felgenventil dicht. Wird das Reifendruckregelsystem des Fahrzeuges eingeschaltet, so füllt sich zuerst der Raum vor dem Kolben des Ventilträgers. Der Druck baut sich in diesem Raum auf und schiebt den Ventilträger samt Ventil nach außen zum Felgenventil. Nachdem sich die beiden Ventile, Achs- und Felgenventil gekoppelt habe, erfolgt die Regelung des Reifendrucks.

Das Kräftegleichgewicht am Ventilträger ist gegeben durch die Federkraft des Ventils plus Reifendruck multipliziert mit der Querschnittsfläche des kleineren Absatzes am Ventilträger auf der einen Seite und dem herrschenden Druck auf der Querschnittsfläche des größeren Absatzes am Ventilträger auf der anderen Seite des Ventilträgers als axial beweglicher Kolben. Durch gezielte Wahl der Federkraft der beiden Ventile, die Sinnvollerweise identisch ist, und Wahl der Durchmesserdifferenz der beiden Absätze am Ventilträger lässt sich der minimale Druck bestimmen, bei dem der Ventilkörper sich axial vom Felgenventil weg bewegt und das Felgenventil schließen lässt. Dieser Druck entspricht dem minimalen Reifendruck.

Eine derartig konzipierte Ventil- und Dichtungseinheit lässt sich als Drehteil unabhängig von den Radachsen und Antriebswellen separat anfertigen und nachträglich in die vorbereiteten Radachsen und Antriebswellen einsetzen. Sie kann auch aus einem anderen Werkstoff gefertigt werden als der Werkstoff der Radachse und der Antriebswelle.

Fahrzeugseitig gelangt das Druckmedium, Luft, Gas oder andere Medien, bei feststehender Radachse durch einen elastischen Schlauch am feststehenden Anschluß der axialen Bohrung der Radachse zum Achsventil. Bei den angetriebenen Rädern besitzt die Antriebs- oder Gelenkwelle in der Regel mehrere Absätze. Das Druckmedium gelangt fahrzeugseitig vor der Radlagerung über eine radiale Bohrung am Umfang eines Wellenabsatzes, vorzugsweise zwischen dem Gelenkkopf und seiner Lagereinheit, in die axiale Bohrung der rotierende Antriebs- oder Gelenkwelle und von dort zum Achsventil. Die radiale Bohrung wird entweder beidseitig durch Wellendichtringe oder durch eine darüber liegende, radial durchbohrte dynamische Dichtung mit vier Dichtlippen abgedichtet.

Bei einer vorteilhafteren Lösung gelangt das Druckmedium fahrzeugseitig durch einen parallel zur Rotationsachse durchbohrten Quadring, der in einer stirnseitigen Nut einer Labyrinthdichtung zwischen dem Wellenabsatz der Antriebs- bzw. Gelenkwelle und der Radaufhängung platziert ist, in eine radiale Bohrung und von dort durch die axiale Bohrung der Antriebs- oder Gelenkwelle zum Achsventil.

Der Vorteil dieser dynamischen Abdichtung liegt darin, dass nur eine einzige Dichtung mit vier Dichtlippen verwendet wird, die in zwei sich gegenüber liegenden axialen Nuten, auf den Stirnseiten zwischen der rotierenden Antriebs- oder Gelenkwelle und der feststehenden Radaufhängung schwimmend platziert ist. Diese durchbohrte dynamische Axialdichtung lässt sich durch Lösen der Radmutter und Abnahme der Antriebswelle austauschen. Weitere Labyrinthe oberhalb der Dichtung verhindern durch Fliehkraft der rotierenden Welle den Eintritt von Schmutz und Fremdkörpern zur Dichtung. Die Axialdichtung kann auch in einem der beiden Teile fest sitzen und gegen eine plane Fläche des anderen Teils dynamisch abdichten.

Bei einer erfindungsgemäß gestalteten Radachse und Antriebs- oder Gelenkwelle bleiben die Radlagerung und die Radnabe unangetastet. Die Räder der angetriebenen Wellen sind jederzeit gegen die der nicht angetriebenen Achsen austauschbar.

Im Einzelnen zeigen:

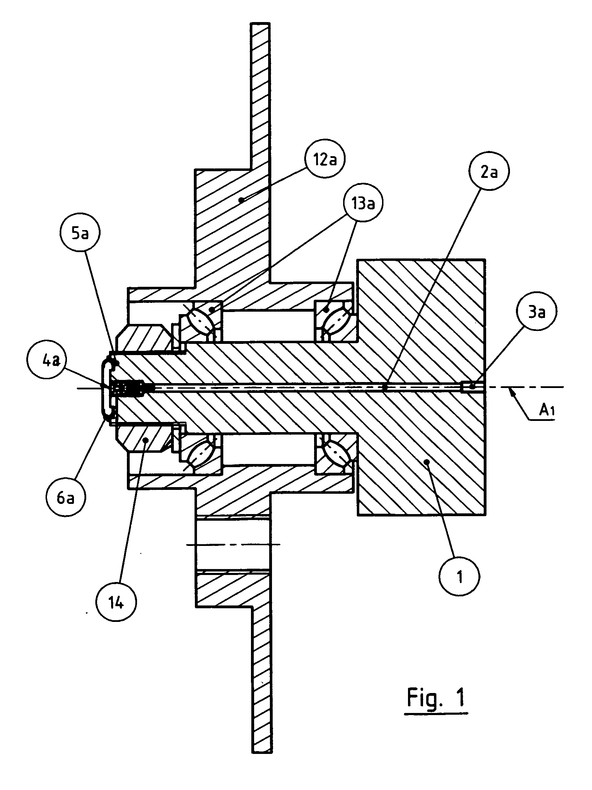

- Fig. 1: den Querschnitt durch die erfindungsgemäße, feststehende Radachse mit einer zentralen Bohrung und einer Ventileinheit am Ende der Boh- rung zur Felge hin, und einem in Bezug auf das Achsventil koaxialen Kupplungselement, bestehend aus einer axialen Nut mit einer darin be- findlichen dynamischen Axialdichtung,

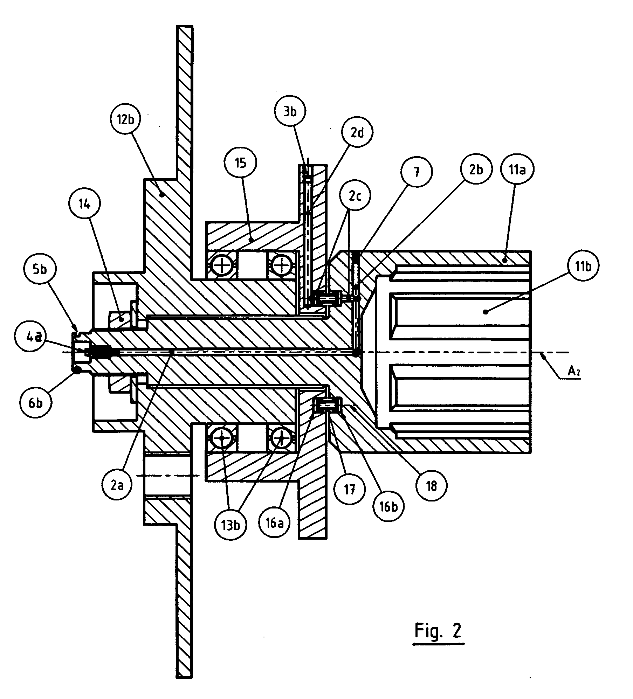

- Fig. 2: den Querschnitt durch die erfindungsgemäße, rotierende Antriebswelle oder Gelenkwelle eines angetriebenen oder zusätzlich auch gelenkten Rades mit einer stirnseitigen Labyrinthdichtung und einer zentralen Bohrung sowie einer Ventileinheit, platziert am radseitigen Ende der Antriebs- oder Gelenkwelle mit einem in Bezug auf das Achsventil ko- axialen Kupplungselement, bestehend aus einer Außennut auf einem kleinen Wellenabsatz und einer statischen Radialdichtung in der Nut.

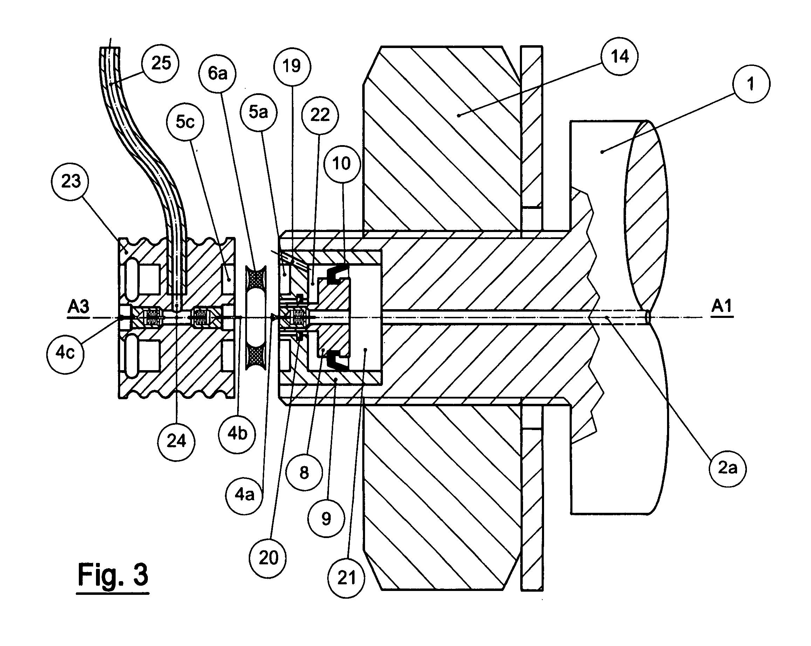

- Fig. 3: den Querschnitt durch eine erfindungsgemäße Radachse eines Fahr- zeuges mit einem axial beweglich angeordneten Achsventil, einer Axi- aldichtung zur Kopplung an die Felgennabe und einem Felgenventil, das mit dem Achsventil korrespondiert.

Identische Teile haben die gleiche Ziffer. Unterschiedliche Indizes oder Buchstaben kennzeichnen verschiedene Bereiche oder unterschiedliche Ausführungen oder mehrfache Anordnung desselben Elementes an verschiedenen Stellen.

Gemäß Fig. 1 ist eine erfindungsgemäße, feststehende Radachse (1), die in ihrer neutralen Phase auf der Rotationsachse (A₁) eine axiale Bohrung (2a) aufweist. Am fahrzeugseitigen Ende der axialen Bohrung (2a) befindet sich der feststehende Anschluß (3a) für Druckluftzufuhr mittels elastischen Schlauchs. Am felgenseitigen Ende der axialen Bohrung (2a) ist ein Rückschlagventil (4a) austauschbar befestigt. Ringförmig um das Achsventil (4a) befindet sich auf der Stirnseite der feststehenden Radachse (1) eine axiale Nut (5a), in der eine U- oder quadringförmige, dynamische Axialdichtung (6a), die die feststehende Radachse (1) mit Hilfe einer mit ihr korrespondierenden Nut an der rotierenden Felge oder in der Felgennabe abdichtet, vorzugsweise fliegend platziert ist. Die nicht dargestellte Felge wird auf den Absatz der Radnabe (12a) aufgesetzt und hieran angeschraubt. Die Radnabe (12a) ist mittels Wälzlager (13a) auf der Radachse (1) gelagert und mit Hilfe der selbst sichernden Radmutter (14) gesichert. Die Radachse (1) kann gegen die Felge auch durch einen Radialdichtring abgedichtet werden. In diesem Falle sitzt der Radialdichtring in einer Umfangsnut auf einem kleinen Absatz am radseitigen Ende der Radachse (1), in Bezug auf das Achsventil koaxial, in einer Vertiefung bzw. Senkung der Felgennabe. Der Radialdichtring dichtet ebenfalls dynamisch ab.

Die Nut (5a) bildet gemeinsam mit der Dichtung (6a) die Hälfte einer Kupplung, ein axiales Kupplungselement, deren zweite Hälfte sich an der Felge oder in der Felgennabe befindet. Das Kupplungselement kann auch, wie in Fig. 2 beschrieben, radial gestaltet werden.

Die Dichtung (6a) der Kupplung ist ein Verschleißteil und somit dem Abrieb unterworfen. Sie kann im Kupplungsteil der Felgennabe oder der Radachse und Antriebs- oder Gelenkwelle platziert und bei jedem Radwechsel, d.h. mindestens zweimal im Jahr, ausgetauscht werden.

Die Nadelköpfe der beiden zusammenwirkenden Ventile, Achsventil (4a) und Felgenventil (4b) sind derart gestaltet, dass sie sich gegenseitig halten und nach der Montage ihre federnde Sperrwirkung aufheben. Dies kann beispielsweise durch kugel- und pfannenförmige bzw. kegelförmige Gestaltung der zusammenwirkenden Nadelköpfe und -spitzen, vorzugsweise aus gehärteten Werkstoffen, wie eine Kompasslagerung erfolgen.

Gemäß Fig. 2 ist eine erfindungsgemäß axial durchbohrte (2a) Antriebswelle (11a) oder Gelenkwelle (11 b) durch eine Verzahnung mit Hilfe der selbst sichernden Radmutter (14) an der Radnabe (12b) angeschraubt. Die Radnabe (12b) ist mittels Wälzlager (13b) in der Radaufhängung (15) drehbeweglich gelagert.

Die Rotationsachse (A₂) der Antriebs- oder Gelenkwelle (11a, 11b) ist durchbohrt (2a). Das Druckmedium gelangt fahrzeugseitig durch elastische Schläuche über den Anschluß (3b) an der feststehen Radaufhängung (15), an der auch der nicht dargestellter Bremssattel befestigt ist, durch die radiale Bohrung (2d) und axiale Bohrung (2c) der Radaufhängung (15) zur dynamischen Axialdichtung (17). Die dynamische Axialdichtung (17) ist wie ein Quadring mit vier Dichtlippen gestaltet und axial zwischen den koaxialen Dichtlippen durchbohrt (18). Sie sitzt axial fliegend mit je zwei Dichtlippen beidseitig der Bohrungen (18) in einer an der Stirnseite eines kleinen Wellenabsatzes angebrachten Nut (16b) auf der Antriebs- bzw. Gelenkwelle einerseits und einer korrespondierenden Nut (16a) in der Radaufhängung (15) andererseits. Von dort gelangt das Druckmedium zuerst durch die axiale (2c) und danach durch die radiale Bohrung (2b) in die axiale Bohrung (2a) der Antriebs- oder Gelenkwelle (11a, 11 b) und von dort zum Achsventil (4a), das am Ende der Bohrung (2a) austauschbar befestigt ist. Vom Achsventil (4a) gelangt das Druckmedium über das Felgenventil (4b) in das hier nicht dargestellte Rad, das mit der rotierenden Radnabe (12b) befestigt ist.

Der Stopfen (7) verschließt die offene Bohrung (2b), die Fertigungstechnisch bedingt ist.

Die rotierende Antriebs- oder Gelenkwelle (11a, 11 b) ist gemeinsam mit der Radnabe (12b) mittels Lagerpaket (13b) in der Radaufhängung (15) gelagert und mit der selbst sichernden Mutter (14) gesichert. Die Antriebswelle besitzt radseitig koaxial um das Achsventil (4a) einen kleinen Absatz mit einer Außennut (5b) und einer statischen Radialdichtung (6b), die zusammen ein Kupplungselement, in diesem Fall einen Kupplungsnippel, bilden. Dieses Kupplungselement dient zum Ankoppeln der Antriebs- oder Gelenkwelle (11a, 11 b) an das andere, die Kupplung ergänzende Kupplungselement des Rades. Das zweite und ergänzende Kupplungselement, in diesem Fall eine Kupplungsdose, der Kupplung befindet sich an der Felge oder in der Felgennabe. Selbstverständlich können die Rollen der beiden Kupplungselemente, Nippel und Dose, in Bezug auf deren Zuordnung zur Antriebs- oder Gelenkwelle (11a, 11 b) und zur nicht dargestellten Felgennabe vertauscht werden, wenn dies für die Fertigung, Lagerung oder Handhabung und Montage sinnvoller erscheint.

Wegen der Austauschbarkeit der Räder zwischen einer nicht angetriebenen und einer angetriebenen Radnabe (12a, 12b) wird in der Kupplung um das Achsventil (4a) vorzugsweise einheitlich eine dynamische Axial- oder Radialdichtung verwendet.

Gemäß Fig. 3 befindet sich am radseitigen Ende der durchbohrten Radachse und Antriebs- oder Gelenkwelle (1) ein Achsventil (4a) das im zylindrischen Ventilträger (8) eingeschraubt ist. Der Ventilträger (8) besitzt zwei Absätze mit unterschiedlichen Durchmessern ähnlich wie ein Kolben befestigt an einer Kolbenstange und sitzt axial beweglich in einem vorzugsweise zylindrischen Hohlkörper (9), der innenseitig für die passgenaue Aufnahme des Ventilträgers (8) analog zum diesem zwei unterschiedlich große Ausdrehungen besitzt. Am Umfang der beiden Absätze befinden sich zwischen den beiden Teilen, Ventilträger (8) und dem Hohlkörper (9) je eine Kolbendichtung (10) und eine Stangendichtung (20), die verhindern, dass Druckmedium in den Raum (22) zwischen den beiden Absätzen gelangt. Der Raum (22) zwischen den beiden Absätzen und Dichtungen (10, 20) ist durch eine kleine Bohrung (19) mit der Außenluft d.h. mit dem Atmosphärendruck verbunden. Der Hohlkörper (9) ist abgedichtet in eine Ausdrehung der Radachse (1), vorzugsweise austauschbar vor der Radmutter (14), eingesetzt, um die Achse nicht zu schwächen. Er besitzt an seiner radseitigen Stirnfläche eine Axialnut (5a), die zur Aufnahme einer dynamischen oder statischen Dichtung (6a) dient. Zwischen dem Ventilträger (8) und dem fahrzeugseitigen Ende des Hohlkörpers (9) befindet sich der Raum (21), der für die axiale Bewegung des Ventilträgers (8) vorgesehen ist. Im aktiven Zustand des Fahrzeug-Reifendruckregelsystems befindet sich in der axialen Bohrung (2a) Druckluft. Sie drückt auf die größere Stirnseite des Ventilträgers (8) und schiebt diesen mit dem Achsventil (4a) bis zum Anschlag nach außen zum Felgenventil (4b) hin. Ist die Felge nicht montiert, so bleibt das Achsventil (4a) geschlossen und das Reifendruckregelsystem des Fahrzeuges bleibt dicht. Gegenüber dem Achsventil (4a) befindet sich eine Felgennabe (23) im nicht montierten Zustand mit einem Felgenventil (4b), das ebenfalls geschlossen ist und die Reifenluft nicht raus lässt. In der Felgennabe (23) ist gegenüber dem Felgenventil (4b) optional ein weiteres Felgenventil (4c) angebracht, um in Bedarfsfall den Reifendruck auch von außen manuell zu kontrollieren und zu regulieren. Die Felgenventile (4b, 4c) sind durch den Kanal (24) mit der Rohrleitung (25) in der Felge oder Felgenspeiche und dadurch mit dem Felgenbett und Reifeninnenraum verbunden.

Nach der Montage der Felge auf die Radachse koppelt sich die Ventilnadel des Felgenventils (4b) an die Ventilnadel des Achsventils (4a). Die Ventilnadeln heben gegenseitig ihre Federkräfte auf und öffnen die beiden Ventile (4a, 4b). Dadurch wird das Reifeninnere mit dem Druckmedium des Fahrzeug-Reifendruckregelsystems verbunden. Der freie Raum im Inneren der Felgennabe um die beiden Ventile (4a, 4b) wird bei der Radachse durch eine dynamische und bei der Antriebs- und Gelenkwelle durch eine statische Dichtung (6a) auf dem kleinsten Durchmesser abgedichtet.

Auf dem Ventilträger (8) wirkt fahrzeugseitig die Kraft, die der Druck in der axialen Bohrung (2a) auf seine Stirnfläche innerhalb des Hohlraumes (21) ausübt. Felgenseitig wirken auf den Ventilträger (8) die Federkraft des Achsventils (4a) und die Kraft, die der Reifendruck auf die kleine Stirnfläche des Ventilträgers (8) ausübt. Solange die fahrzeugseitige Kraft auf die größere Fläche des Ventilträgers (8) größer ist als die felgenseitige Kraft, bleibt der Ventilträger (8) am linken Anschlag stehen und beide Ventile (4a, 4b) sind offen und das Fahrzeug kann den Reifendruck regeln. Fällt der fahrzeugseitige Druck unter einem bestimmten Wert, wie z.B. 1 bar = 0,1 N/mm² = 10⁵ Pa oder 15 psi, bewegt sich der Ventilträger (8) in Richtung der axialen Bohrung (2a) und das Felgenventil (4b) schließ automatisch. Somit lässt sich über die Wahl der Durchmesser der beiden Absätze, Kolben- und Stangendurchmesser, des Ventilträgers (8) den minimalen Druck im Reifen bestimmen, bei dem das Felgenventil (4b) automatisch schließt und den Reifendruck nicht weiter reduzieren lässt. Schaltet man den fahrzeugseitigen Druck abrupt ab, so schließt das Felgenventil (4b) sofort und behält den Reifendruck konstant bei. Somit kann das Reifendruckregelsystem des Fahrzeuges nur bei Bedarf von Zeit zu Zeit aktiv werden. Dies ist beispielsweise während einer längeren Stilllegung des Fahrzeuges sinnvoll, um die Reifen nicht zu beschädigen und nicht schneller altern oder walken zu lassen. Eine defekte Dichtung oder ein Leck im System beeinträchtigt den Reifendruck nicht.

Die in der Beschreibung, den Zeichnungen und den Ansprüchen offenbarten Merkmale der Erfindung können sowohl einzeln als auch in beliebiger Kombination für die Verwirklichung der Erfindung von Bedeutung sein. Alle offenbarten Merkmale sind erfindungswesentlich.

## Patentansprüche

1. Radachse und Antriebs- oder Gelenkwelle für Fahrzeuge mit zentraler Reifendruckversorgung durch eine Bohrung in der Antriebsachse und Antriebs- oder Gelenkwelle **dadurch gekennzeichnet,**
**dass** am radseitigen Ende der axialen Bohrung (2a) ein einfaches mechanisches Achsventil (4a) platziert ist, das mit einem zweiten mechanischen Felgenventil (4b), das in der Felgennabe (23) angeordnet ist, derart zusammenarbeitet, dass die beiden Ventilnadelköpfe nach der Montage des Rades sich gegenseitig ihre Federkraft behaftete Sperrwirkungen aufheben und die Reifenluft mit der Druckluftquelle des Fahrzeuges verbinden und dass an mindestens einer Seite der Radachse und der Antriebs- oder Gelenkwelle sich auf dem kleinstmöglichenen Durchmesser eine koaxiale Umfangsnut (5a, 16b) befindet, in der eine dynamische Dichtung (6a, 17) als Kupplungsglied zwischen den beiden relativ zu einander rotierenden Teilen (1, 23, 15, 11 a, 11b,) austauschbar platziert ist.

2. Radachse und Antriebs- oder Gelenkwelle für Fahrzeuge nach Anspruch 1 **dadurch gekennzeichnet,**
**dass** das Achsventil (4a) an einem Ventilträger (8) befestigt ist, der als eine Kolben-Kolbenstangeneinheit an zwei unterschiedlich großen Durchmessern in einem vorzugsweise zylindrischen Hohlkörper (9) axial beweglich gelagert und gegen diese radial derart abgedichtet ist, dass kein Druckmedium von beiden Seiten in den Hohlraum (22) zwischen den beiden Dichtungen (10, 20) gelangt, wobei der Hohlraum (22) durch eine Bohrung (19) mit dem Atmosphärendruck verbunden ist.

3. Antriebs- oder Gelenkwelle für Fahrzeuge nach Anspruch 1 oder 2 **dadurch gekennzeichnet,**
**dass** das Druckmedium von der feststehenden Radaufhängung (15) über axiale Bohrung (18) einer vorzugsweise fliegend gelagerten Dichtung (17) als Kupplungsglied zwischen den beiden relativ zueinander rotierenden Teilen (15, 11 a, 11 b) in die axiale Bohrung (2a) der rotierenden Antriebswelle (11a) oder Gelenkwelle (11 b) fließt, wobei die Dichtlippen der Dichtung (17) paarweise koaxial übereinander liegen und der Verbindungssteg zwischen den beiden Koaxialen Dichtlippenpaaren axiale Bohrungen (18) aufweist.

## Claims

1. Wheel axle and drive or universal shaft for vehicles with central tire pressure supply through a bore in the drive axle and drive- or universal shaft,
**characterized in that**,
at the wheel side end of the axial bore (2a) a simple mechanical axle valve (4a) is placed, which co-acts with a second mechanical rim valve (4b) provided in the rim hub (23) in such a manner that, after mounting of the wheel, the two valve needle heads mutually cancel their respective spring loading-imparted blockage effect and connect the air of the tire to the compressed air source of the vehicle and that, on at least the side of the wheel axle and of the drive or universal shaft, where the diameter is as small as possible, a coaxial circumferential groove (5a, 16b) is provided, in which a dynamic seal (6a, 17) is interchangeable placed, acting as a coupling member between the two components (1, 23, 15, 11a, 11b) which revolve in relation to one another.

2. Wheel axis and drive or universal shaft for vehicles according to claim 1,
**characterized in that**,
The axle valve (4a) is fixed to a valve carrier (4a), which is axially movably mounted in a preferably cylindrical hollow body (9) at two localities of differently sizes diameters, being radially sealed in relation to these in such a manner that no pressure medium enters from either sides into the hollow space (22) between the two seals (10, 20), the hollow space (22) being connected to atmospheric pressure through a bore (19).

3. Drive or universal shaft for vehicles according to claim 1 or 2,
**characterized in that**,
the pressure medium flows from the fixed wheel suspension (15) by way of an axial bore (18) through a seal (17), which is preferably floatingly mounted, serving as coupling member between the two components (15, 11 a, 11 b) revolving in relation to one another, into the axial bore (2a) of the revolving drive shaft (11 a) or the universal shaft (11 b), the sealing lips of the seal (17) being coaxially positioned, one above the other in pairs, and the connecting web between the two coaxial pairs of sealing lips being provided with axial bores (18) therethrough.

## Revendications

1. Les axes de roue et arbres de transmission ou articulés pour véhicules à approvisionnement de pression de gonflage central par un alésage dans l'axe d'entraînement ou l'arbre de transmission ou articulé sont **caractérisés par** une soupape d'axe mécanique simple (4a), placée à l'extrémité côté roue de l'alésage axial (2a), qui travaille avec une deuxième soupape de jante (4b), situé dans le moyeu de la jante (23), de manière à ce que les deux tête d'aiguille de soupape, après le montage de la roue, annulent réciproquement leurs effets de blocage dus à la tension de ressort et connectent l'air du pneu avec la source d'air de pression du véhicule et que se trouve sur le plus petit diamètre possible sur au moins un côté de l'axe de la roue et de l'arbre de transmission ou articulé, une gorge périphérique coaxiale (5a, 16b) dans laquelle un joint dynamique (6a, 17) remplaçable est placé comme élément de couplage entre les deux parties rotatives dépendantes l'une de l'autre (1, 23, 15, 11 a, 11b,).

2. Les axes de roue et arbres de transmission ou articulés pour véhicules selon exigence 1 sont **caractérisés par le fait que**
La soupape d'axe (4a) est fixée à un support de soupape (8), qui est disposée de façon axiale et mobile comme unité à piston et tige de piston en deux diamètres différents dans un corps creux de préférence cylindrique (9) et colmaté de façon radiale contre ceux-ci de telle manière qu'aucun agent de pression n'arrive des deux côtés dans l'espace creux (22) entre les deux joints (10, 20), alors que l'espace creux (22) est relié à la pression de l'atmosphère par un alésage (19).

3. Les arbres de transmission et articulés pour les véhicules selon exigences 1 et 2 sont **caractérisés par le fait que**
L'agent de pression court depuis la suspension fixe de la roue (15) via l'alésage axial (18) d'un joint de préférence mobile (17) comme élément de couplage entre les deux parties rotatives dépendantes l'une de l'autre (15, 11a, 11 b) dans l'alésage axial (2a) des arbres de transmission rotatifs (11a) ou arbres articulés (11 b), alors que les lèvres d'étanchéité du joint (17) sont disposées par paire et de manière coaxiale les unes sur les autres et que la tige de connexion entre les deux paires de lèvres d'étanchéité coaxiales présentent des alésages axiaux (18).
